# EUROPEAN PATENT SPECIFICATION

(11) **EP 2 630 065 B1**
(45) Date of publication and mention of the grant of the patent: **03.12.2014**
(21) Application number: 11773247.9
(22) Date of filing: 19.10.2011
(51) Int. Cl.: B65G 59/12

(54) **APPARATUS FOR SEPARATING A FIRST PACK AND A SECOND PACK WHICH ARE ARRANGED IN A STACK**
VORRICHTUNG ZUM TRENNEN EINER EINEM STAPEL ANGEORDNETEN ERSTEN UND EINER ZWEITEN PACKUNG
APPAREIL POUR SÉPARER UN PREMIER PAQUET ET UN SECOND PAQUET QUI SONT AGENCÉS EN UNE PILE

(30) Priority: 20.10.2010 PL 39270710 P
(43) Date of publication of application: 28.08.2013
(73) Proprietor: Philip Morris Products S.A., 2000 Neuchâtel (CH)
(72) Inventor: BABRAJ, Pawel, PL-30-074 Kraków (PL); KOWALIK, Edward, PL-321-420 Gdów (PL)
(74) Representative: Bohest AG
(86) International application number: PCT/EP2011/068249
(87) International publication number: WO 2012/052474

(56) References cited:
- JP-A- 60 031 443
- US-A- 5 803 702
- US-A1- 2005 169 740

## Description

The present invention relates to a separating apparatus for separating a first pack and a second pack which are arranged in a stack according to the preamble of claim 1, to a heat-shrinking apparatus comprising such separating apparatus, and to corresponding methods.

Consumer goods, for example smoking articles, are frequently packed in containers which are wrapped by an outer wrapper of a plastics material for protecting the goods from moisture, for preserving the taste of the goods, or for many additional purposes.

Packs of smoking articles, for example cigarettes, are often further packed into a cartridge containing a plurality of such packs. For example, twenty such packs are packed into one cartridge, with the packs being arranged in the cartridge in stacks of two packs.

Typically, packs of smoking articles are wrapped by an outer wrapper of a heat-shrinkable plastics material. One example for a heat-shrinkable plastics material is polypropylene. After wrapping the outer wrapper of the heat-shrinkable material around the cigarette pack the wrapper must be exposed to heat so as to allow the outer wrapper to shrink to tightly enclose the pack and to provide a proper wrinkle-free appearance.

The packs being provided with the outer wrapper which is not yet heat-shrinked may typically be transported in stacks of two packs. Where packs can be transported in a stack two walls of the packs, for example the front wall of one pack and the back wall of the other pack, abut against one another in the stack. These abutting walls cannot be properly exposed to heat. This may lead to a reduced quality appearance of the heat-shrinking of the outer wrapper. Therefore, according to the art, the packs are separated in a shrink tunnel such that they can enter above and below a central heating plate. An apparatus and method for separating a first pack and a second pack which are arranged in a stack according to the preambles of claims 1 and 9 is known from US-A-5 803 702. An apparatus and method for heat-shrinking the outer wrappers of a first pack and a second pack arranged in a stack according to the preamble of claims 7 and 11 is known from US-A-2005/0169740.

The present invention suggests a novel apparatus for separating a first pack and a second pack which are arranged in a stack. The stack is movable on a transport path. The apparatus comprises a deflection unit comprising at least one deflection device. The at least one deflection device has at least one pair of rotatable rollers which are positioned laterally adjacent to the transport path. A first roller of the at least one pair of rollers is positioned at one side of the transport path for engaging a first side wall of the first pack. The second roller of the at least one pair of rollers is positioned at the other side of the transport path for engaging a second side wall of the first pack engaged by the first roller. The at least one pair of rotatable rollers is arranged to define a deflection path, and this deflection path includes an acute angle with the transport path of the stack. Thus, the apparatus allows for separation of the first pack from the second pack by creating a space between the first pack and the second pack. In general, the deflection of the packs is directed substantially in the direction normal to the plane of the abutting walls of the first and second packs. Preferably, the deflection is effected such that the pack only translates during the deflection without or with only little rotation. This facilitates the introduction of the deflected pack between the corresponding heating plates. In particular, this may provide an increase in machine speed. Further, it may reduce or prevent damage to the pack that may be caused by a rotation and counter rotation of the pack to align the deflected pack into a position that allows heat-shrinking.

While generally the first and second packs of the stack can be arranged laterally adjacent to one another, preferably the first and second packs are arranged one above the other in the stack. The deflection unit may comprise one or more deflection devices. With the aid of the one or more deflection devices the packs are spatially separated from one another so that the large walls of the separated packs can subsequently be exposed to heat to cause heat-shrinking of the outer wrapper.

In one particular embodiment of the separating apparatus according to the invention, the at least one pair of rollers is arranged at a first position relative to the transport path for engaging the first pack, for example the upper pack. The at least one pair of rollers define a first deflection path. The first deflection path runs upwards relative to the transport path of the stack. In this embodiment, the upper pack is deflected upwards so that a space is created between the upper pack and the lower pack. The lower pack is transported further in the direction of the transport path. After heat-shrinking of the outer wrapper of both packs the upper pack may be transported downwards again to form a stack with the lower pack again. Alternatively, the lower pack can be transported upwards to form a stack with the upper pack again. The stack can then be further processed. For example, the stack of the two packs with the heat-shrinked outer wrappers can be placed into a cartridge. As a further alternative, the first pack could travel back on top of the second pack due to gravity, instead of being actively transported.

The term "upwards" as used in this context is to be understood to mean a direction that is substantially perpendicular to the transport direction of the stack of packs. Preferably, the term "upwards" refers to a direction that comprises at least one component that is directed opposite to the direction of gravity. The term "downwards" is likewise used to refer to a direction which in substantially opposite to the "upwards" direction. Nevertheless, it is in the spirit of the invention to also encompass embodiments, where the general transport direction of the stack of packs is vertical. In that case, the "upward" direction would be a horizontal movement.

In another particular embodiment of the separating apparatus according to the invention, the at least one pair of rollers is arranged at a second position relative to the transport path for engaging the second pack, for example the lower pack. The at least one pair of rollers define a second deflection path. The second deflection path runs downwards relative to the transport path of the stack. In this embodiment, the lower pack is deflected downwards so that a space is created between the lower pack and the upper pack. The upper pack is transported further in the direction of the transport path. Also in this embodiment, after heat-shrinking of the outer wrapper of both packs the lower pack may be transported upwards again to form a stack with the lower pack again. Alternatively, the upper pack can be transported downwards to the lower pack to form a stack with the lower pack again. The stack can then be further processed. For example, the stack of the two packs with the heat-shrinked outer wrappers can be placed into a cartridge.

In a still further embodiment of the separating apparatus of the invention the deflection unit comprises at least two deflection devices. The two deflection devices comprise a first deflection device for defining the first deflection path running upwards relative to the transport path of the stack. The first deflection device comprises at least one pair of rollers. The at least one pair of rollers of the first deflection device is arranged in the first position relative to the transport path of the stack for engaging the first pack of the stack (the upper pack). The two deflection devices further comprise a second deflection device for defining the second deflection path running downwards relative to the transport path of the stack. The second deflection device also comprises at least one pair of rollers. The at least one pair of rollers of the second deflection device is arranged at the second position relative to the transport path of the stack for engaging the second pack of the stack (the lower pack). Both the first and second deflection paths each include an acute angle with the transport path. This embodiment is advantageous in that the two packs are both deflected thus increasing the spatial distance between the first and second packs.In accordance with another aspect of the separating apparatus according to the invention each deflection device comprises at least two pairs of rollers. This embodiment provides for an improved engagement and transport of the pack along the respective deflection path. In addition, due to the deflection path being longer the spatial distance between the separated first and second packs is increased.

In any of the afore-mentioned embodiments of the separating apparatus according to the invention, the acute angle is preferably between about 2 degrees to about 15 degrees, and preferably is within about 2.5 degrees to about 7.5 degrees. In this respect, the term "about" is to be understood to also comprise and specify the respective exact values. This allows for a sufficient spatial separation of the first and second packs while allowing a high machine speed. Further, damage to the packs that may be caused by the change of direction can be thus avoided or reduced. Further, the required spatial distance can be achieved without the need for a long deflection path which allows for a compact build of the apparatus according to the invention.

A further aspect of the invention is related to an apparatus for heat-shrinking the outer wrappers of a first pack and a second pack arranged in a stack. The first pack and the second pack are each individually wrapped with an outer wrapper. The outer wrappers are made of a heat-shrinkable material, for example of polypropylene. The heat-shrinking apparatus comprises:
- a separation device in accordance with any of the embodiments described above;
- a transport device for transporting the separated first and second packs along spatially separated exposure paths through the heat-shrinking apparatus; and
- a heating unit arranged to apply heat to the outer wrappers of the separated first and second packs during the transport of the first and second packs on the exposure paths.

After the first and second packs are separated, the packs can be transported individually along spatially separated exposure paths through the heat-shrinking apparatus, so that the large walls of the packs, for example the front and rear walls of the packs, can be exposed to heat to cause the heat-shrinking of the outer wrapper. The heating unit is arranged to apply heat to the outer wrappers as they are transported on the spatially separated exposure paths. Such an apparatus allows for an effective and reliable heat-shrinking of the outer wrapper. The packs may be stopped within the heating unit to support the complete heat-shrinking of the wrapping material.

In one particular embodiment of the heat-shrinking apparatus according to the invention the heating unit comprises at least three heating plates. The three heating plates comprise a first heating plate which is arranged above the exposure path of the first pack, a second heating plate which is arranged below the exposure path of the first pack and above the exposure path of the second pack, and a third heating plate which is arranged below the exposure path of the second pack. This embodiment is advantageous since it is simple from a in constructional point of view.

A further aspect of the invention relates to a method of separating a first pack and a second pack which are arranged in a stack. The stack is moved on a transport path. The method comprises the step of deflecting the first pack or the second pack from the transport path to move the deflected pack on a deflection path. The deflection path includes an acute angle with the transport path to create a space between the first pack and the second pack. The advantages of the separating method are already mentioned above when discussing the advantages of the separating apparatus.

In one particular embodiment of the separating method according to the invention, the first pack and the second pack are deflected from the transport path in opposite directions on first and second deflection paths, respectively. This embodiment is particularly advantageous since it increases the spatial distance between the separated packs, as has already been discussed above.

Still a further aspect of the invention relates to a method of heat-shrinking the outer wrappers of a first pack and a second pack arranged in a stack. The first pack and the second pack are each individually wrapped with an outer wrapper. The outer wrappers are made of a heat-shrinkable material, for example they are made of polypropylene. The heat-shrinking method comprises the steps of
- separating the first pack and the second pack using any of the embodiments of the separating method discussed above;
- transporting the separated first and second packs along spatially separated exposure paths, and
- applying heat to the outer wrappers of the separated first and second packs during the transport along the spatially separated exposure paths. The advantages of this method are already discussed above when discussing the corresponding heat-shrinking apparatus according to the invention.

In one particular embodiment of the heat-shrinking method according to the invention the steps of transporting the separated first and second packs and applying heat to the outer wrappers of the separated first and second packs com prise the steps of - transporting the separated first pack on a first exposure path extending between a first heating plate arranged above the first exposure path and a second heating plate arranged
below the first exposure path, and
- transporting the separated second pack on a second exposure path extending between the second heating plate arranged above the second exposure path and a third heating plate arranged below the second exposure path. This embodiment is effective and reliable and allows for an easy constructional solution for the corresponding apparatus.

Further advantageous aspects and embodiments of the invention will become apparent from the following description of embodiments of the invention with the aid of the schematic drawings in which:
- Fig. 1: shows a first embodiment of essential parts of the separating apparatus according to the invention and of the heat shrinking apparatus according to the invention, and
- Fig. 2: shows a front view of the heating plates of the heat-shrinking apparatus with two separated packs being transported along first and second exposure paths extending between the heating plates.

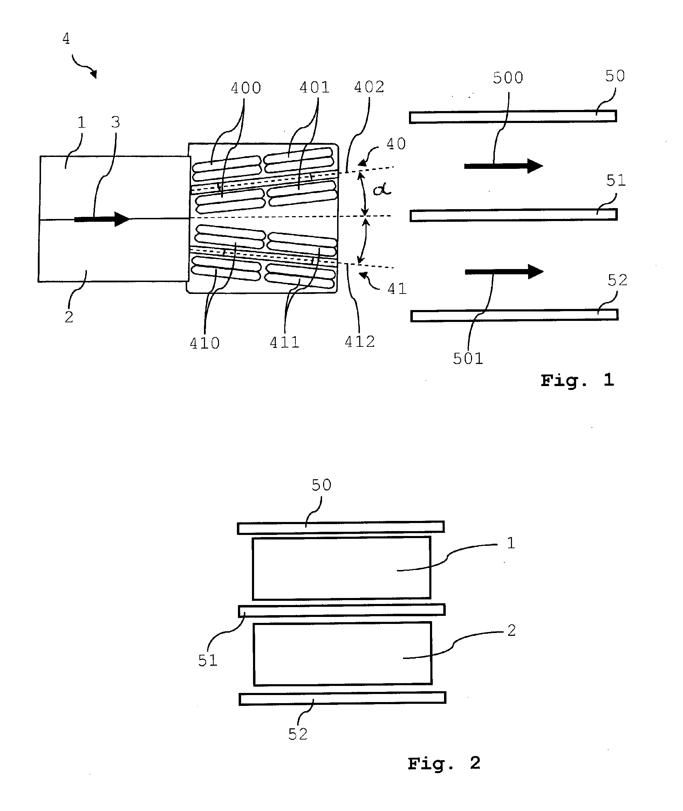

Fig. 1 shows a first (upper) cuboidal pack 1 and a second (lower) cuboidal pack 2 which are arranged one above the other in a stack. The stack is transported along a transport path, the direction of which is indicated by the arrow 3. A deflection unit 4 comprises a first deflection device 40 and a second deflection device 41.

The first deflection device 40 of the embodiment shown comprises two pairs 400 and 401 of rollers which are arranged laterally adjacent to the transport path. Only one roller of each pair 400, 401 of rollers can be seen in Fig. 1. The first roller of the pair 400 is arranged laterally adjacent to and in a first position relative to the transport path at to engage a first side wall of the upper cuboid pack 1. The non-visible roller of the pair 400 of rollers engages a second side wall of the upper cuboid pack 1. The second pair 401 of rollers of the first deflection device 40 is arranged in a similar manner.

The first pair 400 of rollers and the second pair 401 of rollers of the first deflection device are arranged to define a first deflection path which is indicated by the dashed line 402. The first deflection path 402 includes an acute angle α (alpha) with the transport path the direction of which is represented by the arrow 3 and runs upwards relative to the transport path.

The second deflection device 41 also comprises two pairs of rollers 410 and 411, from which only one roller is visible. The first pair of rollers 410 and the second pair of rollers 411 of the second deflection device define a second deflection path which is indicated by the dashed line 412. The second deflection path 412 also includes an acute angle α with the transport path represented by the arrow 3 and runs downward relative to the transport path. Although the acute angles α are shown to be identical they may be different. Also, in general only one deflection device may be sufficient, and each deflection device may only have one pair of rollers or may have three or more pairs of rollers. The embodiment shown in Fig. 1 comprises two such deflection devices 40 and 41, and each of the deflection devices 40 and 41 comprises two pairs of rollers. The angle α is preferably between about 2 degrees and about 15 degrees, and more preferable the angle α is between about 2.5 and about 7.5 degrees.

Downstream of the deflection unit 4 when viewed in the direction of transport of the packs a heating unit 5 is shown. The heating unit 5 of the embodiment shown comprises three heating plates 50, 51 and 52.

The operation of the apparatus is as follows. At the time the stacked upper pack 1 and lower pack 2 reach the deflection unit 4, the first pair 400 of rollers of the first deflection device 40 drivingly engages the opposite side walls of the upper pack 1. The engaged upper pack 1 is then deflected along the first deflection path 402 and is further transported in a direction towards the heating plates 50, 51 with the aid of the second pair 401 of rollers of the first deflection device 40. Similarly, the first pair 410 of rollers of the second deflection device 41 drivingly engage the opposite side walls of the lower pack 2. The engaged lower pack 2 is then deflected along the second deflection path 412 and is further transported in a direction towards the heating plates 51, 52 with the aid of the second pair 410 of rollers of the second deflection device 41.

Fig. 2 shows the separated packs 1 and 2 as they are further transported along their respective first (upper) exposure path 500 and second (lower) exposure path 501 (see Fig.1). The large walls of the wrapped packs 1 and 2 (outer wrapper not visible) can then be exposed to heat. For example, the heating plates 50 and 51 can be gently pressed against the outer wrapper of the upper pack 1 thus causing the shrinking of the outer wrapper of the upper pack 1. Similarly, the heating plates 51 and 52 can be gently pressed against the outer wrapper of the lower pack 2 thus causing the shrinking of the outer wrapper of lower pack 2.

Once shrinking has been completed, the upper pack 1 and lower pack 2 can be moved along respective paths to form a stack again (not shown). The stack of the packs 1 and 2 can then be further processed, for example the stack can be placed into a cartridge.

## Claims

1. Separating apparatus for separating a first pack (1) and a second pack (2) which are arranged in a stack, the stack being movable on a transport path (3), **characterized in that** the apparatus comprises
a deflection unit (4) comprising at least one deflection device (40; 41), the at least one deflection device (40; 41) having at least one pair (400, 401; 410, 411) of rotatable rollers which are positioned laterally adjacent to the transport path (3), a first roller of the at least one pair (400, 401; 410, 411) of rollers being positioned at one side of the transport path (3) for engaging a first side wall of the first pack (1) and a second roller of the at least one pair (400, 401; 410, 411) of rollers being positioned at the other side of the transport path (3) for engaging a second side wall of the first pack (1) engaged by the first roller,
wherein the at least one pair of rotatable rollers is arranged to define a deflection path (402; 412) which includes an acute angle (α) with the transport path (3) of the stack to allow for separation of the first pack (1) from the second pack (2) by creating a space between the first pack (1) and the second pack (2) in a direction substantially normal to the plane of the abutting walls of the first and second packs.

2. Separating apparatus according to claim 1, wherein the at least one pair of rollers (400, 401) is arranged at a first position relative to the transport path (3) for engaging the first pack (1) and for defining a first deflection path (402), wherein the first deflection path (402) runs upwards relative to the transport path (3) of the stack.

3. Separating apparatus according to claim 1, wherein the at least one pair of rollers (410, 411) is arranged at a second position relative to the transport path (3) for engaging the second pack (2) and for defining a second deflection path (412), wherein the second deflection path (412) runs downwards relative to the transport path (3) of the stack.

4. Separating apparatus according to claim 2 and claim 3, wherein the deflection unit (4) comprises at least two deflection devices (40, 41), a first deflection device (40) for defining the first deflection path (402) running upwards relative to the transport path (3) of the stack, the first deflection device (40) comprising at least one pair (400, 401) of rollers being arranged in the first position relative to the transport path (3) of the stack for engaging the first pack (1) of the stack, and a second deflection device (41) for defining the second deflection path (412) running downwards relative to the transport path (3) of the stack, the second deflection device (41) comprising at least one pair (410, 411) of rollers being arranged at the second position relative to the transport path (3) of the stack for engaging the second pack (2) of the stack, both the first and second deflection paths (402, 412) each including an acute angle (α) with the transport path (3).

5. Separating apparatus according to any one of the preceding claims, wherein each deflection device (40; 41) comprises at least two pairs (400, 401; 410, 411) of rollers.

6. Separating apparatus according to any one of the preceding claims, wherein the acute angle (α) is between about 2 degrees and about 15 degrees, preferably between about 2.5 degrees and about 7.5 degrees.

7. Heat-shrinking apparatus for heat-shrinking the outer wrappers of a first pack (1) and a second pack (2) arranged in a stack, the first pack (1) and the second pack (2) each being individually wrapped with an outer wrapper, the outer wrappers being made of a heat-shrinkable material, the apparatus comprising:
- a separation device;
- a transport device for transporting the separated first and second packs along spatially separated exposure paths (500, 501) through the heat-shrinking apparatus;
- a heating unit arranged to apply heat to the outer wrappers of the separated first and second packs (1, 2) during the transport of the first and second packs (1, 2) on the exposure paths (500, 501),
**characterized in that** the separation device is a separating apparatus according to anyone of the preceding claims.

8. Heat-shrinking apparatus according to claim 7, wherein the heating unit comprise at least three heating plates (50, 51, 52), a first heating plate (50) being arranged above the exposure path (500) of the first pack (1), a second heating plate (51) being arranged below the exposure path (500) of the first pack (1) and above the exposure path (501) of the second pack (2), and a third heating plate (52) being arranged below the exposure path (501) of the second pack (2).

9. Method of separating a first pack (1) and a second pack (2) which are arranged in a stack, the stack being moved on a transport path (3), **characterized in that** the method comprises
- using an apparatus for separating a first pack (1) and a second pack (2) according to any one of claims 1 to 6,
- deflecting the first pack (1) or the second pack (2) from the transport path (3) to move the deflected pack on a deflection path (402; 412), the deflection path (402; 412) including an acute angle (α) with the transport path (3) to create a space between the first pack (1) and the second pack (2) in a direction substantially normal to the plane of the abutting walls of the first and second packs.

10. Method of separating according to claim 9, wherein the first pack (1) and the second pack (2) are deflected from the transport path (3) in opposite directions on first and second deflection paths (402; 412), respectively.

11. Method of heat-shrinking the outer wrappers of a first pack (1) and a second pack (2) arranged in a stack, the first pack (1) and the second pack (2) each being individually wrapped with an outer wrapper, the outer wrappers being made of a heat-shrinkable material, the method comprising the steps of
- separating the first pack (1) and the second pack (2);
- transporting the separated first and second packs (1; 2) along spatially separated exposure paths (500; 501), and
- applying heat to the outer wrappers of the separated first and second packs (1; 2) during the transport along the spatially separated exposure paths (500; 501), **characterized in that** separating the first pack (1) and the second pack (2) is performed using a method according to anyone of claims 9 or 10.

12. Method of heat-shrinking according to claim 11, wherein the steps of transporting the separated first and second packs (1; 2) and applying heat to the outer wrappers of the separated first and second packs (1; 2) comprise the steps of
- transporting the separated first pack (1) on a first exposure path (500) extending between a first heating plate (50) arranged above the first exposure path (500) and a second heating plate (51) arranged below the first exposure path (500), and
- transporting the separated second pack (2) on a second exposure path (501) extending between the second heating plate (51) arranged above the second exposure path (501) and a third heating plate (52) arranged below the second exposure path (501).

## Patentansprüche

1. Trennvorrichtung zum Trennen einer ersten Packung (1) und einer zweiten Packung (2), die in einem Stapel angeordnet sind, wobei der Stapel auf einer Transportbahn (3) bewegbar ist, **dadurch gekennzeichnet, dass** die Vorrichtung
eine Ablenkeinheit (4) mit mindestens einer Ablenkeinrichtung (40; 41) umfasst, wobei die mindestens eine Ablenkeinrichtung (40; 41) mindestens ein Paar (400, 401; 410, 411) drehbare Rollen hat, welche seitlich an die Transportbahn (3) angrenzend positioniert sind, wobei eine erste Rolle des mindestens einen Rollenpaars (400, 401; 410, 411) an einer Seite der Transportbahn (3) zum Angreifen an einer ersten Seitenwand der ersten Packung (1) positioniert ist und eine zweite Rolle des mindestens einen Rollenpaars (400, 401; 410, 411) an der anderen Seite der Transportbahn (3) positioniert ist zum Angreifen an einer zweiten Seitenwand der ersten Packung (1), die von der erste Rolle angegriffen wird,
wobei das mindestens eine Paar drehbarer Rollen so angeordnet ist, dass es eine Ablenkbahn (402; 412) definiert, die einen spitzen Winkel (α) mit der Transportbahn (3) des Stapels einschliesst, um eine Trennung der ersten Packung (1) von der zweiten Packung (2) zu ermöglichen durch Schaffen eines Raums zwischen der ersten Packung (1) und der zweiten Packung (2) in einer Richtung, die im Wesentlichen senkrecht zur Ebene der aneinander anstossenden Wände der ersten und der zweiten Packung ist.

2. Trennvorrichtung nach Anspruch 1, wobei das mindestens eine Rollenpaar (400, 401) an einer ersten Position relativ zu der Transportbahn (3) angeordnet ist zum Angreifen an der ersten Packung (1) und zum Definieren einer ersten Ablenkbahn (402), wobei die erste Ablenkbahn (402) relativ zu der Transportbahn (3) des Stapels nach oben verläuft.

3. Trennvorrichtung nach Anspruch 1, wobei das mindestens eine Rollenpaar (410, 411) an einer zweiten Position relativ zu der Transportbahn (3) angeordnet ist zum Angreifen an der zweiten Packung (2) und zum Definieren einer zweiten Ablenkbahn (412), wobei die zweite Ablenkbahn (412) relativ zu der Transportbahn (3) des Stapels nach unten verläuft.

4. Trennvorrichtung nach Anspruch 2 und Anspruch 3, wobei die Ablenkeinheit (4) mindestens zwei Ablenkeinrichtungen (40, 41) umfasst, eine erste Ablenkeinrichtung (40) zum Definieren der ersten Ablenkbahn (402), die relativ zu der Transportbahn (3) des Stapels nach oben verläuft, wobei die erste Ablenkeinrichtung (40) mindestens ein Rollenpaar (400, 401) umfasst, das zum Angreifen an der ersten Packung (1) des Stapels in der ersten Position relativ zu der Transportbahn (3) des Stapels angeordnet ist, und eine zweite Ablenkeinrichtung (41) zum Definieren der zweiten Ablenkbahn (412), die relativ zu der Transportbahn (3) des Stapels nach unten verläuft, wobei die zweite Ablenkeinrichtung (41) mindestens ein Rollenpaar (410, 411) umfasst, das zum Angreifen an der zweiten Packung (2) des Stapels an der zweiten Position relativ zu der Transportbahn (3) des Stapels angeordnet ist, wobei sowohl die erste als auch die zweite Ablenkbahn (402, 412) jeweils einen spitzen Winkel (α) mit der Transportbahn (3) einschliesst.

5. Trennvorrichtung nach einem der vorangehenden Ansprüche, wobei jede Ablenkeinrichtung (40; 41) mindestens zwei Rollenpaare (400, 401; 410, 411) umfasst.

6. Trennvorrichtung nach einem der vorhergehenden Ansprüche, wobei der spitze Winkel (α) zwischen etwa 2 Grad und etwa 15 Grad liegt, vorzugsweise zwischen etwa 2.5 Grad und etwa 7.5 Grad.

7. Wärmeschrumpfvorrichtung zum Wärmeschrumpfen der äusseren Umhüllungen einer ersten Packung (1) und einer zweiten Packung (2), die in einem Stapel angeordnet sind, wobei die erste Packung (1) und die zweite Packung (2) jeweils einzeln mit einer äusseren Umhüllung umhüllt sind, wobei die äusseren Umhüllungen aus einem wärmeschrumpfbaren Material gemacht sind, wobei die Vorrichtung umfasst:
- eine Trennungseinrichtung;
- eine Transporteinrichtung zum Transportieren der getrennten ersten und zweiten Packungen entlang räumlich getrennter Expositionsbahnen (500, 501) durch die Wärmeschrumpfvorrichtung;
- eine Heizeinheit, die angeordnet ist, um während des Transports der ersten und zweiten Packungen (1, 2) auf den Expositionsbahnen (500, 501) Wärme auf die äusseren Umhüllungen der getrennten ersten und zweiten Packungen (1, 2) aufzubringen,
**dadurch gekennzeichnet, dass** die Trennungseinrichtung eine Trennvorrichtung nach einem der vorangehenden Ansprüche ist.

8. Wärmeschrumpfvorrichtung nach Anspruch 7, wobei die Heizeinheit mindestens drei Heizplatten (50, 51, 52) umfasst, wobei eine erste Heizplatte (50) oberhalb der Expositionsbahn (500) der ersten Packung (1) angeordnet ist, eine zweite Heizplatte (51) unterhalb der Expositionsbahn (500) der ersten Packung (1) und oberhalb der Expositionsbahn (501) der zweiten Packung (2) angeordnet ist, und eine dritte Heizplatte (52) unterhalb der Expositionsbahn (501) der zweiten Packung (2) angeordnet ist.

9. Verfahren zum Trennen einer ersten Packung (1) und einer zweiten Packung (2), die in einem Stapel angeordnet sind, der auf einer Transportbahn (3) bewegt wird, **dadurch gekennzeichnet, dass** das Verfahren umfasst
- Verwenden einer Vorrichtung zum Trennen einer ersten Packung (1) und einer zweiten Packung (2) nach einem der Ansprüche 1 bis 6,
- Ablenken der ersten Packung (1) oder der zweiten Packung (2) von der Transportbahn (3), um die abgelenkte Packung auf einer Ablenkbahn (402; 412) zu bewegen, wobei die Ablenkbahn (402; 412) einen spitzen Winkel (α) mit der Transportbahn (3) einschliesst, um einen Raum zwischen der ersten Packung (1) und der zweiten Packung (2) zu schaffen, in einer Richtung, die im Wesentlichen senkrecht zur Ebene der aneinander angrenzenden Wände der ersten und der zweiten Packung ist.

10. Verfahren zum Trennen nach Anspruch 9, wobei die erste Packung (1) und die zweite Packung (2) von der Transportbahn (3) in entgegengesetzten Richtungen auf einer ersten beziehungsweise auf einer zweiten Ablenkbahn (402; 412) abgelenkt werden.

11. Verfahren zum Wärmeschrumpfen der äusseren Umhüllungen einer ersten Packung (1) und einer zweiten Packung (2), die in einem Stapel angeordnet sind, wobei die erste Packung (1) und die zweite Packung (2) jeweils einzeln mit einer äusseren Umhüllung umhüllt sind, wobei die äusseren Umhüllungen aus einem wärmeschrumpfbaren Material hergestellt sind, wobei das Verfahren die Schritte umfasst:
- Trennen der ersten Packung (1) und der zweiten Packung (2);
- Transportieren der getrennten ersten und zweiten Packungen (1; 2) entlang räumlich getrennter Expositionsbahnen (500, 501), und
- Aufbringen von Wärme auf die äusseren Umhüllungen der getrennten ersten und zweiten Packungen (1; 2) während des Transports entlang der räumlich getrennten Expositionsbahnen (500; 501), **dadurch gekennzeichnet, dass** das Trennen der ersten Packung (1) und der zweiten Packung (2) unter Verwendung eines Verfahrens nach einem der Ansprüche 9 oder 10 durchgeführt wird.

12. Verfahren zum Wärmeschrumpfen nach Anspruch 11, wobei die Schritte des Transportierens der getrennten ersten und zweiten Packungen (1; 2) und des Aufbringens von Wärme auf die äusseren Umhüllungen der getrennten ersten und zweiten Packungen (1; 2) die Schritte umfassen
- Transportieren der getrennten ersten Packung (1) auf einer ersten Expositionsbahn (500), die sich zwischen einer oberhalb der ersten Expositionsbahn (500) angeordneten ersten Heizplatte (50) und einer unterhalb der ersten Expositionsbahn (500) angeordneten zweiten Heizplatte (51) erstreckt, und
- Transportieren der getrennten zweiten Packung (2) auf einer zweiten Expositionsbahn (501), die sich zwischen einer oberhalb der zweiten Expositionsbahn (501) angeordneten zweiten Heizplatte (51) und einer unterhalb der zweiten Expositionsbahn (501) angeordneten dritten Heizplatte (52) erstreckt.

## Revendications

1. Appareil de séparation pour séparer un premier paquet (1) d'un second paquet (2) arrangés en pile, la pile étant mobile sur une trajectoire de transport (3), characterisé en ce que l'appareil comprend
une unité de déflection (4) comportant au moins un dispositif de déflection (40; 41), cet au moins un dispositif de déflection (40 ; 41) ayant au moins une paire (400, 401; 410, 411) de rouleaux rotatifs qui sont positionnés latéralement adjacent à la trajectoire de transport (3), un premier rouleau d'au moins une paire (400, 401 ; 410, 411) de rouleaux étant disposé d'un côté de la trajectoire de transport (3) engageant une première face latérale du premier paquet (1) et un second rouleau d'au moins une paire (400, 401 ; 410, 411) de rouleaux étant disposé de l'autre côté de la trajectoire de transport (3) engageant une seconde face latérale du premier paquet (1) engagé par le premier rouleau,
dans lequel cette au moins une paire de rouleaux rotatifs est arrangée de façon à définir une trajectoire de déflection (402 ; 412) qui inclut un angle aigu avec la trajectoire de transport (3) de la pile de façon a permettre la séparation du premier paquet (1) du second paquet (2) dans une direction substantiellement normale au plan formé par les faces adjacentes du premier paquet (1) et du second paquet (2).

2. Appareil de séparation selon la revendication 1, dans lequel cette au moins une paire de rouleaux (400, 401) est disposée à une première position relative à la trajectoire de transport (3) pour engager le premier paquet (1) et pour définir une première trajectoire de déflection (402), et dans lequel la première trajectoire de déflection (402) s'étend vers le haut relativement à la trajectoire de transport (3) de la pile.

3. Appareil de séparation selon la revendication 1, dans lequel cette au moins une paire de rouleaux (410, 411) est disposée à une seconde position relative à la trajectoire de transport (3) pour engager le second paquet (2) et pour définir une seconde trajectoire de déflection (412), et dans lequel la seconde trajectoire de déflection (412) s'étend vers le bas relativement à la trajectoire de transport (3) de la pile.

4. Appareil de séparation selon la revendication 2 et la revendication 3, dans lequel l'unité de déflection comprend au moins deux dispositifs de déflection (40, 41), un premier dispositif de déflection (40) pour définir la première trajectoire de déflection (402) s'étendant vers le haut relativement à la trajectoire de transport (3) de la pile, le premier dispositif de déflection (40) comprenant au moins une paire (400, 401) de rouleaux disposée dans la première position relative à la trajectoire de transport (3) de la pile pour engager le premier paquet (1) de la pile, et un second dispositif de déflection (41) pour définir la seconde trajectoire de déflection (412) s'étendant vers le bas relativement à la trajectoire de transport (3) de la pile, le second dispositif de déflection (41) comprenant au moins une paire (410, 411) de rouleaux disposée dans la seconde position relative à la trajectoire de transport (3) de la pile pour engager le second paquet (1) de la pile, la première et la seconde trajectoire de déflection (402, 412) formant un angle aigu (α) avec la trajectoire de transport (3).

5. Appareil de séparation selon une des revendications précédentes, dans lequel chaque dispositif de déflection (40, 41) comprend au moins deux paires (400, 401 ; 410, 411) de rouleaux.

6. Appareil de séparation selon une des revendications précédentes, dans lequel l'angle aigu (α) est entre environ 2 degrés et 15 degrés, de préférence entre 2.5 degrés et 7.5 degrés.

7. Appareil de thermorétraction pour thermorétracter l'emballage externe d'un premier paquet (1) et d'un second paquet (2) arrangés en pile, le premier paquet (1) et le second paquet (2) étant individuellement enveloppés dans un emballage externe, cet emballage externe étant fait d'un matériel thermorétractable, l'appareil comprenant :
- un dispositif de séparation ;
- un dispositif de transport des premiers et seconds paquets séparés le long de trajectoires d'exposition séparées dans l'espace (500, 501) à travers un appareil de thermorétraction ;
- une unité de chauffage positionnée de façon à appliquer de la chaleur à l'emballage extérieur du premier paquet et du second paquet séparés (1, 2) pendant le transport du premier paquet et du second paquet sur la trajectoire d'exposition (500, 501), **caractérisé en ce que** le dispositif de séparation est un appareil de séparation selon une des revendications précédentes.

8. Appareil de thermorétraction selon la revendication 7, dans lequel l'unité de chauffage comprend au moins trois plaques de chauffage (50, 51, 52), une première plaque de chauffage (50) étant positionnée au-dessus de la trajectoire d'exposition (500) du premier paquet (1), une deuxième plaque de chauffage (51) étant positionnée au-dessous de la trajectoire d'exposition (500) du premier paquet (1) et au-dessus de la trajectoire d'exposition (501) du second paquet (2), et une troisième plaque de chauffage (52) étant positionnée au-dessous de la trajectoire d'exposition (501) du second paquet (2).

9. Procédé de séparation d'un premier paquet (1) et d'un second paquet (2) arrangés en pile, la pile étant déplacée sur une trajectoire de transport (3), **caractérisé en ce que** le procédé comprend
- utiliser un appareil pour séparer un premier paquet (1) d'un second paquet (2) selon une des revendications 1 à 6,
- dévier le premier paquet (1) ou le second paquet (2) de la trajectoire de transport (3) pour déplacer le paquet dévié sur une trajectoire de déflection (402 ; 412), la trajectoire de déflection (402 ; 412) formant un angle aigu (α) avec la trajectoire de transport (3), créant ainsi un espace entre le premier paquet (1) et le second paquet (2) dans une direction substantiellement normale au plan au plan formé par les faces adjacentes du premier paquet (1) et du second paquet (2).

10. Procédé de séparation selon la revendication 9, dans laquelle le premier paquet (1) et le second paquet (2) sont déviés de la trajectoire de transport (3) dans des directions opposées sur la première et la seconde trajectoire de déflection (402; 412) respectivement.

11. Procédé pour thermorétracter l'emballage externe d'un premier paquet (1) et d'un second paquet (2) arrangés en pile, le premier paquet (1) et le second paquet (2) étant individuellement enveloppés dans un emballage externe, cet emballage externe étant fait d'un matériel thermorétractable, le procédé comprenant les étapes de:
- séparer le premier paquet (1) du second paquet (2) ;
- transporter le premier et le second paquet séparés (1 ; 2) le long de trajectoires d'exposition séparées dans l'espace (500, 501) et
- appliquer de la chaleur à l'emballage extérne du premier paquet et du second paquet séparés (1, 2) pendant le transport le long de trajectoires d'exposition séparées dans l'espace (500, 501), **caractérisé en ce que** la séparation du premier paquet (1) et du second paquet (2) est effectué à l'aide d'un procédé selon une des revendications 9 ou 10.

12. Procédé pour thermorétracter selon la revendication 11, dans laquelle les étapes de transporter le premier et le second paquet séparés (1 ; 2) et appliquer de la chaleur aux emballages externes du premier et du second paquet séparés (1 ; 2) comprenant les étapes de:
transporter le premier paquet séparé (1) sur une première trajectoire d'exposition (500) s'étendant entre la première plaque de chauffage (50) positionnée au-dessus de la première trajectoire d'exposition (500) et une deuxième plaque de chauffage (51) positionnée au-dessous de la première trajectoire d'exposition (500), et
- transporter le second paquet séparé (2) sur une seconde trajectoire d'exposition (501) s'étendant entre la deuxième plaque de chauffage (51) positionnée au-dessus de la seconde trajectoire d'exposition (501) et une troisième plaque de chauffage (52) positionnée au-dessous de la seconde trajectoire d'exposition (501).
